# EUROPEAN PATENT APPLICATION

(11) **EP 1 890 094 A2**
(43) Date of publication of application: **20.02.2008**
(21) Application number: 07114237.6
(22) Date of filing: 13.08.2007
(51) Int. Cl.: F25B 27/02, F24F 11/00

(54) **Cogeneration system**

(30) Priority: 14.08.2006 KR 20060076760
(71) Applicant: LG Electronics Inc., Seoul, 150-721 (KR)
(72) Inventor: Lee, Jae Won, Kuro-ku Seoul 152-092 (KR); Chang, Se Dong, 423-060, Kyungki-do (KR); Jun, Ji Hoon, 137-062, Seoul (KR)
(74) Representative: Vossius & Partner

(57) **Abstract**

A cogeneration system includes at least one generating device (6,6') which generates electric power and produces heat, and a power supply mechanism (60) which supplies electric power generated by the at least one generating device to an air-conditioning system (30) and a general power source (70). A cogeneration system may also include at least one generating device which generates electric power and produces heat, and at least one heat recovery mechanism which distributes heat produced by the at least one generating device to at least one air-conditioning device. A central controller (28) of a cogeneration system, including a plurality of generating devices which generate electric power and produce heat, controls operations of the generating devices based on operations of a plurality of indoor units of an air-conditioning system and operations of heat consuming equipment.

## Description

This application claims the benefit of Korean Patent Application No. 10-2006-0076760, filed on August 14, 2006, the entire contents of which is hereby incorporated by reference in its entirety.

The present invention relates to a cogeneration system and, more particularly, to a cogeneration system in which both electric power and heat generated from a generating device are supplied to an air-conditioning device.

In general, a cogeneration system refers to generating electric power by driving a generator and using heat generated in driving the generator, and a recent trend is that a generating device is installed in a building and electric power generated by the generating device is supplied to a lighting system or various electric equipments in the building and heat generated by the generating device is used for supplying hot water.

A Japanese Laid Open Publication No. 05-026534 discloses a power generation type air-conditioning device that includes a generating device, a plurality of division air-conditioning devices operated by an output of the generating device, and a controller that operates the generating device by an operation start signal of the division air-conditioning devices and stops the operation of the generating device by a stop signal of the division air-conditioning devices.

The generating device includes a generator and an engine that drives the generator.

The division air-conditioning devices are formed as an electric air-conditioner, respectively.

In the power generation type air-conditioning device, heat generated by the engine is used to supply hot water.

However, the related art cogeneration system has a problem that the generating device is operated by the operation start signal or the stop signal of the division air conditioning devices merely to supply electric power to the division air-conditioning devices or stop supplying of the electric power, and waste heat of the engine is used only to supply hot water, failing to maximize the efficiency.

The present invention has been made in view of the above-mentioned problem, and it is one object of the invention to provide a cogeneration system capable of maximizing heat and power efficiency.

It is another object of the invention to provide a cogeneration system capable of effectively operating various generating devices each with a different purpose for using heat by collectively controlling the generating devices.

It is still another object of the invention to provide a cogeneration system that can be easily operated by a user.

To achieve at least these objects there is provided a cogeneration system which includes at least one generating device which generates electric power and produces heat, and a power supply mechanism which supplies electric power generated by the at least one generating device to an air-conditioning system and a general power source.

The general power source may be a power transmission network of an electric power company. The heat produced by the at least one generating device may be distributed to at least one of the air-conditioning system and heat consuming equipment. The power supply mechanism may include a plurality of switches for selectively supplying the electric power generated by the at least one generating device to the air-conditioning system and the general power source.

There is also provided a central controller of a cogeneration system which includes a plurality of generating devices which generate electric power and produce heat, where the central controller controls operations of the generating devices based on operations of a plurality of indoor units of an air-conditioning system and operations of heat consuming equipment.

The central controller may control at least one of the generating devices to generate electric power based on a command to operate at least one of the indoor units, and a heat load of the heat consuming equipment. The central controller may control operations of the generating devices based on at least one command sent by at least one remote controller.

The central controller may control a power supply mechanism to supply electric power generated by at least one of the generating devices to the air-conditioning system. The central controller may control the power supply mechanism to supply electric power generated by at least one of the generating devices to a general power source. The general power source may be a power transmission network of an electric power company.

The central controller may control operations of the generating devices based on a power demand of the indoor units. Each of the generating devices may include an engine, and the central controller may control at least one of an amount of fuel and an amount of air introduced into at least one of the engines based on a power demand of the indoor units. The power demand may depend on a number of indoor units in operation.

There is also provided a cogeneration system which includes at least one generating device which generates electric power and produces heat, and at least one heat recovery mechanism which distributes heat produced by the at least one generating device to at least one air- conditioning device.

The at least one heat recovery mechanism may be provided in the at least one generating device, in the at least one air-conditioning device, or between the at least one generating device and the at least one air-conditioning device.

The heat recovery mechanism may include a heat exchanger. The heat exchanger may heat a refrigerant of the at least one air-conditioning device. The heat recovery mechanism may receive heat from a heat exchanger of the at least one generating device.

The cogeneration system according to the present invention constructed as described above is advantageous in that electric power generated by the air-conditioning device-connected generating device and electric power generated by the heat consuming equipment-connected generating device are provided to at least one of the air-conditioning device and the general power source, namely, the respective electric power generated by the generating devices each with a different heat use purpose is collectively controlled, to thereby perform the operation with an optimum efficiency.

The foregoing and other objects, features, aspects and advantages of the present invention will become more apparent from the following detailed description of the present invention when taken in conjunction with the accompanying drawings.

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a schematic view of a cogeneration system according to a first exemplary embodiment of the present invention.
FIG. 2 is a control block diagram of the cogeneration system according to the first exemplary embodiment of the present invention.
FIG. 3 is a schematic view of a cogeneration system according to a second exemplary embodiment of the present invention.
FIG. 4 is a view showing a construction of power lines and communication lines of the cogeneration system according to the second exemplary embodiment of the present invention.
FIG. 5 is a view showing a construction of a cogeneration system according to a third exemplary embodiment of the present invention.
FIG. 6 is a view showing a construction of a cogeneration system according to a fourth exemplary embodiment of the present invention.
FIG. 7 is a view showing a construction of a cogeneration system according to a fifth exemplary embodiment of the present invention.
FIG. 8 is a view showing a construction of a cogeneration system according to a sixth exemplary embodiment of the present invention.
FIG. 9 is a view showing a construction of a cogeneration system according to a seventh exemplary embodiment of the present invention.

Hereinafter, a cogeneration system according to the exemplary embodiments of the present invention will now be described with reference to the accompanying drawings.

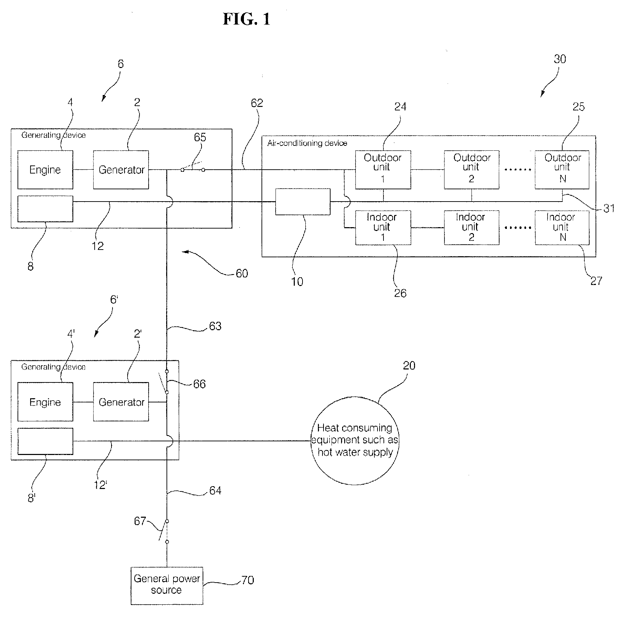

FIG. 1 is a schematic view of a cogeneration system according to a first exemplary embodiment of the present invention.

As shown in FIG. 1, the cogeneration system according to the first exemplary embodiment of the present invention includes a plurality of generating units 6 and 6' , a heat consuming equipment 20, an air-conditioning device 30, and a power supply mechanism 60.

The plurality of generating devices 6 and 6' , the heat consuming equipment 20 and the air-conditioning device 30 can be installed separately in different buildings or collectively in one building. The description herein will be limited to the exemplary case where they are installed together in one building.

The plurality of generating devices 6 and 6' refer to the air-conditioning device-connected generating device 6 which is connected with the air-conditioning device 30 to provide heat to the air-conditioning device 30 and generates electric power, and the heat consuming equipment-connected generating device 6' which is connected with the heat consuming equipment 20 to provide heat to the heat consuming equipment 20 and generates electric power.

The air-conditioning device-connected generating device 6 and the heat consuming equipment-connected generating device 6' include generators 2 and 2' and driving sources for driving the generators 2 and 2' , respectively.

The generators 2 and 2' can be either an AC generator or a DC generator, and respectively include a rotor connected with an output shaft of each of the driving sources to produce electric power when the output shaft is rotated.

The driving sources refer to engines operated by using a fuel cell or fossil fuel such as gas or oil, and the description herein will be limited to the exemplary case where the driving sources are engines 4 and 4' .

The engines 4 and 4' include a fuel injection hole through which a fuel such as gas or oil is injected, an intake hole through which external air is sucked, and an exhaust hole through which an exhaust gas exhausted from the engines 4 and 4' passes.

The air-conditioning device-connected generating device 6 and the heat consuming equipment-connected generating device 6' include waste heat heat exchangers 8 and 8' , respectively, that receive heat from at least one of the generators 2 and 2' and the engines 4 and 4' .

The description herein will be limited to the exemplary case where the waste heat heat exchangers 8 and 8' receive heat of the engines 4 and 4' .

The waste heat heat exchangers 8 and 8' include a coolant heat exchanger connected with the engines 4 and 4' via a coolant line to receive coolant heat of the engines 4 and 4' , and an exhaust gas heat exchanger installed at the exhaust hole in order to recover heat of an exhaust gas exhausted from the engines 4 and 4' , respectively.

The heat consuming equipment 20 is a heat load of a building in which the air-conditioning device-connected generating device 6, the heat consuming equipment-connected generating device 6' , and the air-conditioning device 30 are installed, and the description herein will be limited to the exemplary case the heat consuming equipment is a hot water supply heat exchanger that heats water consumed in the building.

In the air-conditioning device-connected generating device 6, an air-conditioning device heat transfer flow path 12 that transfers waste heat to the air-conditioning device 30 is disposed to connect the waste heat heat exchanger 8 of the air-conditioning device-connected generating device 6 and a heat recovery mechanism 10 (to be described).

In the heat consuming equipment-connected generating device 6' , a heat consuming equipment heat transfer flow path 12' that transfers waste heat to the heat consuming equipment 20 is disposed to connect the waste heat heat exchanger 8' of the heat consuming equipment-connected generating device 6' and the heat consuming equipment 20.

At least one of the heat consuming equipment heat transfer flow path 12' and the heat consuming equipment 20 includes a heat load sensing mechanism such as a temperature sensor or a flowmeter for sensing the heat load of the heat consuming equipment 20.

The air-conditioning device 30, in which a plurality of indoor units 26 and 27 are connected with at least one of outdoor units 24 and 25, is formed as a heat pump type air-conditioner that can interchangeably performs an air cooling operation and an air heating operation.

In the air-conditioning device 30, a compressor, a 4-way valve, an outdoor heat exchanger and an outdoor expansion mechanism are provided in the outdoor units 24 and 25, while an indoor heat exchanger and an indoor expansion mechanism are provided in the indoor units 26 and 27. Accordingly, when the air-conditioning device 30 performs the air cooling operation, the 4-way valve is controlled into an air cooling mode and the indoor heat exchanger serves as an evaporator, while when the air-conditioning device 30 performs the air heating operation, the 4-way valve is controlled into an air heating mode and the indoor heat exchanger serves as a condenser.

When an outdoor temperature is low, e.g., -5(C or lower, the air-conditioning device 30 performs a low-temperature air heating operation, for which the air-conditioning device includes an outdoor heat exchanger bypass unit that allows a refrigerant to bypass the outdoor heat exchanger, not to pass through it, during the low-temperature air heating operation.

The outdoor heat exchanger bypass unit includes a bypass flow path to allow the refrigerant which has been expanded by the outdoor expansion mechanism to bypass therethrough, a bypass valve that opens or closes the bypass flow path, and an outdoor heat exchanger valve that controls introduction of the refrigerant into the outdoor heat exchanger.

The cogeneration system according to the present exemplary embodiment further includes a heat recovery mechanism 10 that recovers heat of the air-conditioning device-connected generating device 6 and provides it to the air-conditioning device 30.

The heat recovery mechanism 10 may be installed in the air-conditioning device-connected generating device 6, in the air-conditioning device 30, or between the air-conditioning device-connected generating device 6 and the air-conditioning device 30.

The heat recovery mechanism 10 is formed as a heat exchanger, to which a refrigerant pipe 31 of the air-conditioning device 30 is connected, so that when the air-conditioning device 30 performs the low-temperature air heating operation, a refrigerant of the air-conditioning device 30 is evaporated while passing through the heat recovery mechanism 10.

Namely, when the air-conditioning device 30 performs the low-temperature air heating operation, the refrigerant, which passes through the outdoor expansion mechanism, passes through the heat recovery mechanism 10, bypassing the outdoor heat exchanger, so as to be evaporated by heat of the heat recovery mechanism 10 and then introduced into the 4-way valve, thereby improving the air heating performance of the air-conditioning device 30 during the low-temperature air heating operation.

The power supply mechanism 60 is formed to provide electric power generated from at least one of the air-conditioning device-connected generating device 6 and the heat consuming equipment-connected generating device 6' to at least one of the air-conditioning device 30 and a general power source 70, and has an air-conditioning device supply mode in which electric power generated by at least one of the air-conditioning device-connected generating device 6 and the heat consuming equipment-connected generating device 6' is entirely provided only to the air-conditioning device 30, a general power supply mode in which electric power generated by at least one of the air-conditioning device-connected generating device 6 and the heat consuming equipment-connected generating device 6' is entirely provided only to the general power source 70, and an air-conditioning device supply and general power source supply mode in which electric power generated by at least one of the air-conditioning device-connected generating device 6 and the heat consuming equipment-connected generating device 6' is provided to both the air-conditioning device 30 and the general power source 70.

Herein, the general power source 70 refers to a common power source provided from a power supplier, such as, for example, a power transmission network of an electric power company.

The power supply mechanism 60 includes an air-conditioning device-connected power line 62 that connects the air-conditioning device-connected generating device 6 and the air-conditioning device 30, a generating device-connected power line 63 that connects the air-conditioning device-connected generating device 6 and the heat consuming equipment-connected generating device 6' , and a general power-connected power line 64 that connects one of the air-conditioning device-connected generating device 6, the heat consuming equipment-connected generating device 6' , and the generating device-connected power line 63, to the general power source 70.

The power supply mechanism 60 further includes an air-conditioning device-connected power switch 65 installed at the air-conditioning device-connected power line 62, a generating device-connected power switch 66 installed at the generating device-connected power line 63, and a general power source-connected power switch 67 installed at the general power source-connected power line 64.

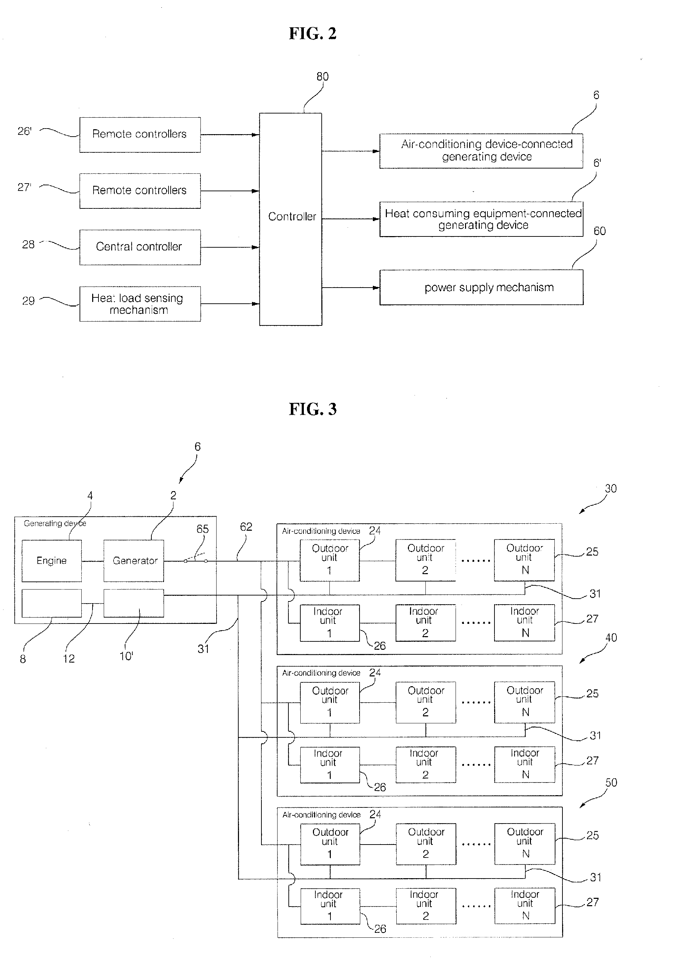

FIG. 2 is a control block diagram of the cogeneration system according to the first exemplary embodiment of the present invention.

The cogeneration system according to the first exemplary embodiment of the present invention further includes a plurality of remote controllers 26' and 27' that respectively control the plurality of indoor units, and a central controller 28 that control all the indoor units.

Also, the cogeneration system further includes a controller 80 that controls the air-conditioning device-connected generating device 6, the heat consuming equipment-connected generating device 6' , and the power supply mechanism 60.

Herein, preferably, the controller 80 controls the air-conditioning device-connected generating device 6, the heat consuming equipment-connected generating device 6' , and the power supply mechanism 60 by means of the plurality of the remote controllers 26' and 27' and the central controller 28.

Preferably, the controller 80 controls the air-conditioning device-connected generating device 6, the heat consuming equipment-connected generating device 6' , and the power supply mechanism 60 according to the operation capacity of the air-conditioning device 30 and a change in a load of the heat consuming equipment 20.

The operation of the cogeneration system according to the present exemplary embodiment will now be described.

First, for one example, when an operation command is inputted to one of the plurality of indoor units through the plurality of remote controllers 26' and 27' or the central controller 28 and if no heat load is sensed by a heat load sensing mechanism 29 of the heat consuming equipment 20, the controller 80 operates only the air-conditioning device-connected generating device 6 and controls the power supply mechanism 60 in the air-conditioning device supply mode.

The controller 80 starts the generator 2 of the air-conditioning device-connected generator 6 and closes the air-conditioning device-connected power switch 65 in the air-conditioning device supply mode.

Accordingly, in the cogeneration system, electric power generated from the air-conditioning device-connected generating device 6 is supplied to the air-conditioning device 30 and heat generated from the air-conditioning device-connected generating device 6 is recovered to the air-conditioning device 30, assisting improvement of performance of the air-conditioning device 30.

For another example, when at least two or more operation commands are inputted to the plurality of indoor units through at least two or more of the plurality of remote controllers 26' and 27' or through the central controller 28 and when a heat load is sensed by the heat load sensing mechanism of the heat consuming equipment 20, the controller 80 operates both the air-conditioning device-connected generating device 6 and the heat consuming equipment-device generating device 6' and controls the power supply mechanism 60 in the air-conditioning device supply mode.

The controller 80 starts both the generator 2 of the air-conditioning device-connected generating device 6 and the generator 2' of the heat consuming equipment-connected generating device 6' and closes the air-conditioning device-connected power switch 65 and the generating device-connected power switch 66 in the air-conditioning device supply mode.

Accordingly, in the cogeneration system, electric power generated by the air-conditioning device-connected generating device 6 and electric power generated by the heat consuming equipment-connected generating device 6' are all supplied to the air-conditioning device 30 and heat generated from the air-conditioning device-connected generating device 6 is recovered to the air-conditioning device 30, assisting to improve the performance of the air-conditioning device 30, and heat generated from the heat consuming equipment-connected generating device 6 is consumed by the heat consuming equipment 20.

In a different example, when an operation command is inputted to one of the plurality of indoor units through one of the remote controllers 26' and 27' or through the central controller 28 and when a heat load is sensed by the heat load sensing mechanism 29 of the heat consuming equipment 20, the controller 80 operates both the air-conditioning device-connected generating device 6 and the heat consuming equipment-connected generating device 6' and the power supply mechanism 60 in the air-conditioning device supply and general power source supply mode.

The controller 80 starts the generator 2 of the air-conditioning device-connected generating device 6 and the generator 2' of the heat consuming equipment-connected generating device 6' , closes the air-conditioning device-connected power switch 65 in the air-conditioning device supply mode, and closes the generating device-connected power switch 66 and the general power source-connected power switch 67 in the general power source supply mode.

Accordingly, in the cogeneration system, electric power generated by the air-conditioning device-connected generating device 6 is supplied to the air-conditioning device 30 and heat generated by the air-conditioning device-connected generating device 6 is recovered to the air-conditioning device 30, assisting to improve the performance of the air-conditioning device 30, and electric power generated by the heat consuming equipment-connected generating device 6' is supplied to the general power source 70 and heat generated from the heat consuming equipment-connected generating device 6' is consumed by the heat consuming equipment 20.

FIG. 3 is a schematic view of a cogeneration system according to a second exemplary embodiment of the present invention.

As shown in FIG .3, in the cogeneration system according to the second exemplary embodiment of the present invention, a plurality of air-conditioning devices 30, 40, and 50 are connected with the single generating device 6.

The generating device 6 includes the generator 2 and the driving source 4 such as the engine that drives the generator 2.

The generating device 6 further includes a waste heat heat exchanger 8 to which at least one of heat of the generator 2 and heat of the driving source 4 is provided.

The waste heat heat exchanger 8 includes the coolant heat exchanger and the exhaust gas heat exchanger like in the first exemplary embodiment of the present invention.

The cogeneration system further includes a heat recovery mechanism 10' that recovers heat of the generating device 6.

The heat recovery mechanism 10' recovers heat of the waste heat heat exchanger 8 to the air-conditioning devices 30, 40, and 50, and can be installed in the generating device 6, in the air-conditioning devices 30, 40, and 50, respectively, or between the generating device 6 and the air-conditioning devices 30, 40, and 50. The description herein will be limited to the exemplary case where the heat recovery mechanism 10' is installed in the generating device 6.

The heat recovery mechanism 10' includes a supply heat exchanger that transfers heat of the waste heat heat exchanger 8, namely, waste heat of the generating device 6, as a refrigerant of each of the air-conditioning devices 30, 40, and 50.

The generating device 6 includes a heat supply line 12 that supplies heat recovered from the waste heat heat exchanger 8 to the heat recovery mechanism 10' ,

A refrigerant pipe 31 of the air-conditioning devices 30, 40, and 50 is connected with the heat recovery mechanism 10' .

In each of the air-conditioning devices 30, 40, and 50, the plurality of the indoor units 26 and 27 can be respectively connected with the single outdoor unit 24, and the plurality of indoor units 26 and 27 can be connected with the plurality of outdoor units 24 and 25. The description herein will be limited to the exemplary case where the plurality of indoor units 26 and 27 are connected with the plurality of outdoor units 24 and 25.

The power line 62 of the air-conditioning devices 30, 40, and 50 is connected with the generating device 6 in parallel or in series.

The power switch 65 that controls power supply to the air-conditioning devices 30, 40, and 50 is installed at the power line 62.

Heat received by the heat recovery mechanism 10' is used by at least one of the plurality of the outdoor units 24 and 25 and the plurality of the indoor units 26 and 27 in the air-conditioning devices 30, 40, and 50.

Namely, the refrigerant pipe 31 connected with the heat recovery mechanism 10' can be connected only with the outdoor units 24 and 25, only with the indoor units 26 and 27, or with all the outdoor units 24 and 25 and the indoor units 26 and 27. The description herein will be limited to the exemplary case where the refrigerant pipe 31 is connected with the respective outdoor units 24 and 25.

In the cogeneration system according to the present exemplary embodiment, when the generating device 6 is installed at a low position such as in a basement of a building and the outdoor units 24 and 25 of the air-conditioning devices 30, 40, and 50 are installed at a high position such as on the roof of the building, the fuel can be easily provided to the generating device 6 and an unpleasant feeling of users that may be caused by the outdoor units 24 and 25 can be minimized, and in this case, when the distance between the outdoor units 24 and 25 of the air-conditioning devices 30, 40, and 50 and the generating device 6 is short, because the refrigerant pipe 31 would not be long, the waste of the generating device 6 can be evenly distributed to the air-conditioning devices 30, 40, and 50.

In the case where the outdoor units 24 and 25 of the air-conditioning devices 30, 40, and 50 and the generating device 6 are installed to be close, the heat recovery mechanism 10' needs not serve to resolve heat distribution imbalance, so it is preferably installed within the generating device 6 or each of the air-conditioning devices 30, 40, and 50, making the cogeneration system have two blocks of the generating device 6 and the air-conditioning devices 30, 40, and 50, to thus simplify the overall structure.

In this case, when the heat recovery mechanism 10' is installed within the generating device 6, a single unit of the heat recovery mechanism 10' can be provided, while if the heat recovery mechanism 10' is installed within each of the air-conditioning devices 30, 40, and 50, multiple units of the heat recovery mechanism 10' are to be provided. Thus, in terms of simplifying the overall structure of the cogeneration system to its maximum level, the heat recovery mechanism 10' is preferably installed in the generating device 6.

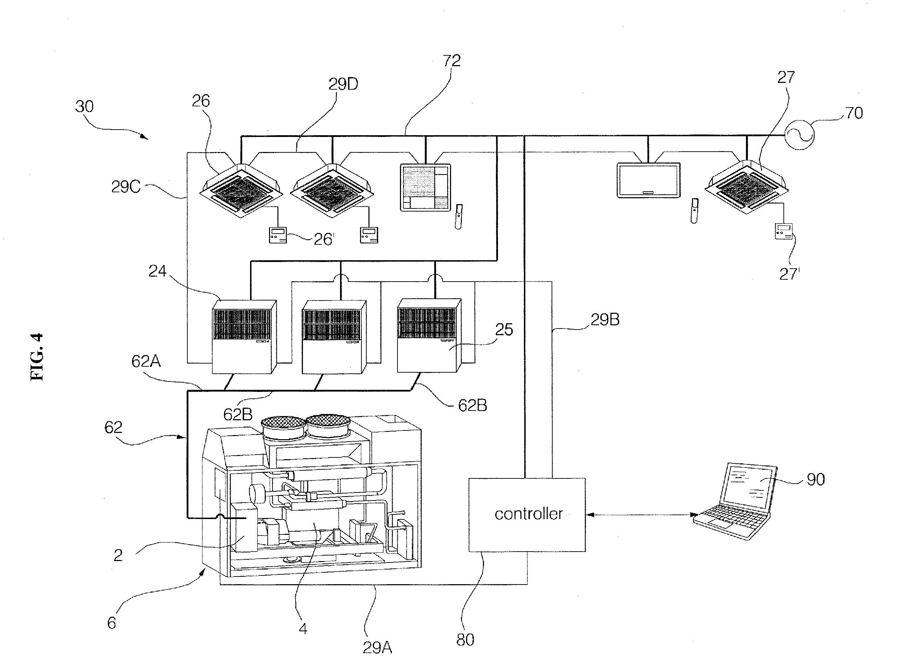

FIG. 4 is a view showing the construction of power lines and communication lines of the cogeneration system according to the second exemplary embodiment of the present invention.

In the cogeneration system according to the second exemplary embodiment of the present invention, the description herein will be limited to the exemplary case where the power line 62 includes a main power line 62A that connects the generator 2 of the generating device 6 and one (e.g., 24 which will be referred to as a main outdoor unit hereinafter) of the outdoor units 24 and 25 and a sub-power line 62B that connects the main outdoor unit 24 and the other outdoor unit 25, as shown in FIG. 4.

Herein, the main power line 62A is thicker than the sub-power line 62B.

In addition to the power line 62, a general power line 72 is connected with the general power source 70 in the air-conditioning devices 30, 40, and 50.

As shown in FIG. 4, the controller 80 and the generating device 6 are connected by a communication line 29A such as RS-322, the controller 80 and the outdoor units 24 and 25 are connected by a communication line 29B such as RS-485, the outdoor unit 24, among the plurality of outdoor units 24 and 25, and the indoor unit 26, among the plurality of indoor units 26 and 27, are connected by a communication line 29C such as RS-485, and the indoor units 26 and 27 are connected by a communication line 29D such as RS-485.

Reference numeral 90 in FIG. 4 denotes a PC that controls the cogeneration system and is connected with the controller 80 by a serial cable so as to display various information of the cogeneration system.

The operation of the cogeneration system according to the present exemplary embodiment will now be described.

First, when a user manipulates at least one of the remote controllers 26' and 27' , namely, when the user operates at least one indoor unit 26, the controller 80 receives signals of the remote controllers 26' and 27' and operates the generating device 6.

The controller 80 drives the engine 4 of the generating device 6 and controls an amount of fuel and/or an amount of external air introduced into the engine 4 in proportion to a power demand of the indoor units 26, which is based on the number of operating indoor units 26 or operation capacity of the indoor units 26.

When the engine 4 is driven, the generator 2 produces electric power and the produced electric power is supplied to the respective air-conditioning devices 30, 40, and 50 via the power switch 65 and the power line 62.

And the controller 80 controls the operation of the compressors of the outdoor units 24 and 25 in consideration of the number of operating indoor units or operation capacity of the indoor units manipulated by the remote controllers 26' and 27' .

Meanwhile, heat generated from the engine 4 according to the operation of the generating device 6 is transferred to the outdoor units 24 and 25 of the air-conditioning devices 30, 40, and 50 via the heat recovery mechanism 10' .

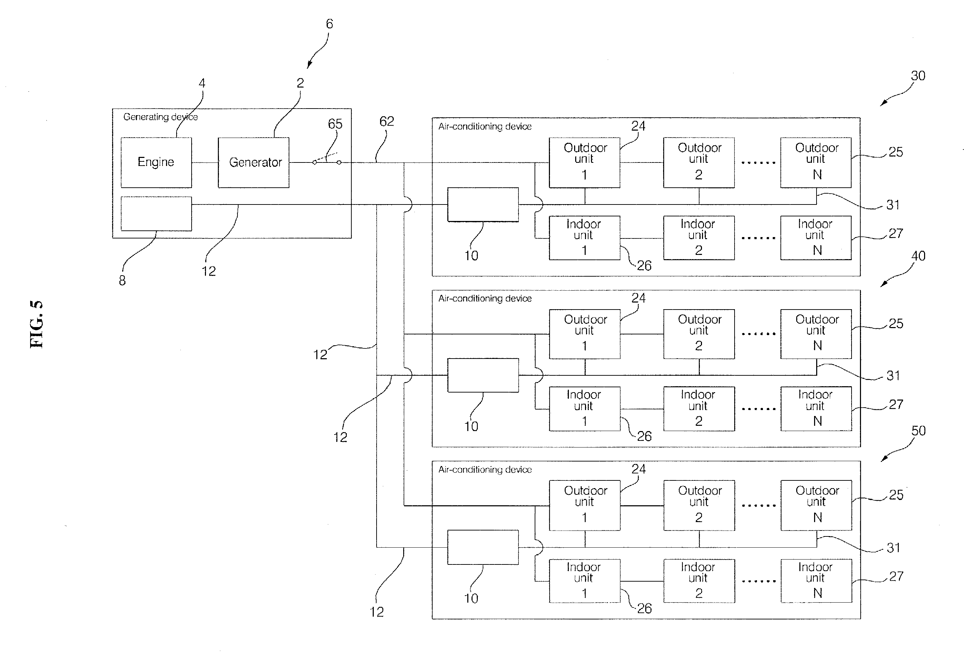

FIG. 5 is a view showing a construction of a cogeneration system according to a third exemplary embodiment of the present invention.

In the cogeneration system according to the third embodiment of the present invention as shown in FIG. 5, the heat recovery mechanism 10 is installed in each of the air-conditioning devices 30, 40, and 50. Other construction and operation of the cogeneration system according to the third embodiment of the present invention are the same as or similar to those of the cogeneration system according to the second exemplary embodiment of the present invention, so the same reference numerals are given and its detailed description will be omitted.

Compared with the cogeneration system according to the second exemplary embodiment of the present invention as shown in FIG. 3 in which the heat recovery mechanism 10' is installed in the generating device 6, so the refrigerant pipe 31 is disposed long at the interior of the generating device 6, decreasing pressure of the refrigerant and increasing a corresponding loss, in the cogeneration system according to the third exemplary embodiment of the present invention as shown in FIG. 5, the heat recovery mechanism 10 is installed in each of the air-conditioning devices 30, 40, and 50, so the refrigerant pipe 31 does not need to be disposed long at the interior of the generating device 6, and actually shorter than that in the second exemplary embodiment of the present invention.

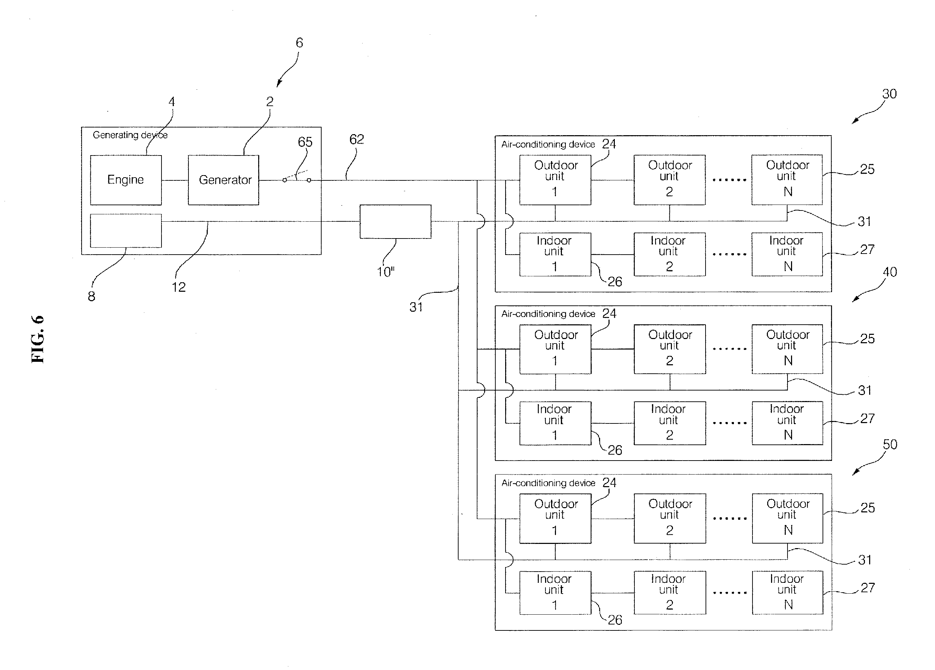

FIG. 6 is a view showing a construction of a cogeneration system according to a fourth exemplary embodiment of the present invention.

In the cogeneration system according to the fourth exemplary embodiment of the present invention as shown in FIG. 6, a heat recovery mechanism 10" is separately installed between the generating device 6 and the plurality of air-conditioning devices 30, 40, and 50. Other construction and operation of the cogeneration system according to the fourth exemplary embodiment of the present invention are the same or similar to those in the second exemplary embodiment of the present invention, so the same reference numerals are given and its detailed description will be omitted.

Referring to the cogeneration system, if the outdoor units 24 and 25 of the air-conditioning devices 30, 40, and 50 are much away from the generating device 6, the heat transfer line 12 and the refrigerant pipe 31 should be installed long, causing a problem that the arrangement of the generating device 6 fails to uniformly distribute heat to the plurality of air-conditioning devices 30, 40, and 50. However, in the cogeneration system according to the fourth embodiment of the present invention, because the heat recovery mechanism 10" is positioned between the generating device 6 and the air-conditioning devices 30, 40, and 50, the possible imbalance of heat distribution can be resolved.

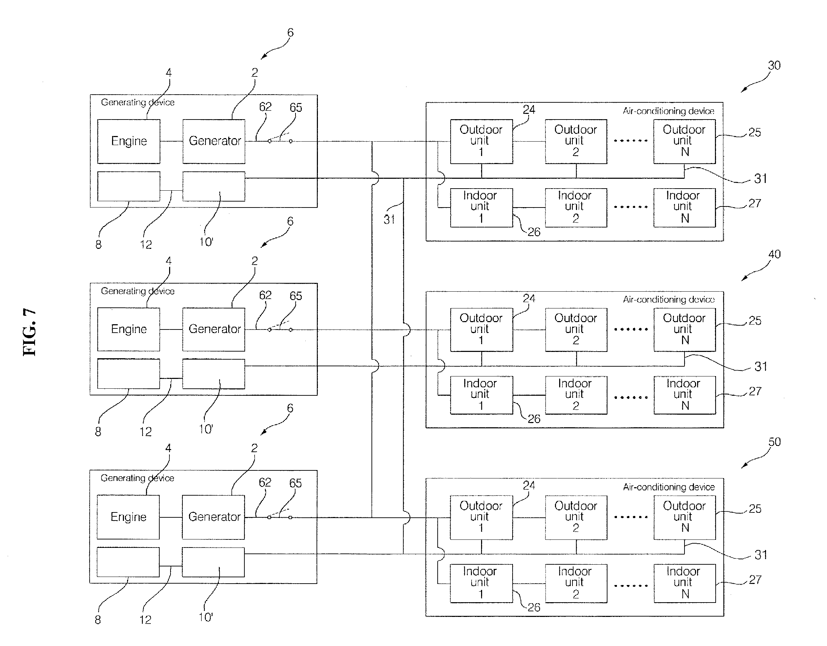

FIG. 7 is a view showing a construction of a cogeneration system according to a fifth exemplary embodiment of the present invention.

In the cogeneration system according to the fifth exemplary embodiment of the present invention as shown in FIG. 7, the plurality of air-conditioning devices 30, 40, and 50 are connected with a plurality of generating devices 6, and the plurality of the generating devices 6 include the heat recovery mechanism 10' , respectively, as in the second exemplary embodiment of the present invention.

The power lines 62 are connected in series or in parallel in the plurality of generating devices 6.

The refrigerant pipes 31 of the air-conditioning devices 30, 40, and 50 are connected in series or in parallel with the heat recovery mechanism 10' .

In the cogeneration system according to the fifth exemplary embodiment of the present invention, when the user manipulates at least one of the remote controllers 26' and 27' , namely, when the user operates at least one indoor unit 26, the controller 80 receives a corresponding signal of the manipulated remote controller and operates at least one of the generating devices 6.

If a smaller number of indoor units 26 and outdoor units are operated, the controller 80 operates only some of the generating devices 6, whereas if a larger number of indoor units 26 and the outdoor units 24 are operated, the controller 80 operates the generating devices 6 corresponding to the number of operated indoor units 26 and the outdoor units 24.

That is, in the cogeneration system according to the present exemplary embodiment, the generation capacity is calculated according to the power demand of the air-conditioning devices 30, 40, and 50, based on which some or the entirety of the generating devices 6 are operated, so the operation of the generating devices 6 can be controlled according to the operational state of the air-conditioning devices 30, 40, and 50.

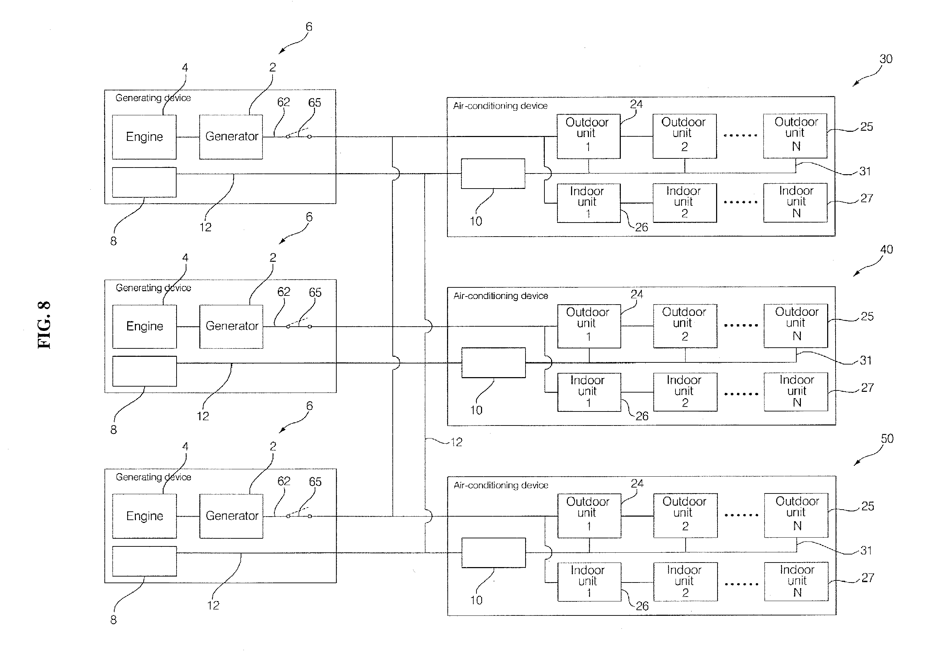

FIG. 8 is a view showing a construction of a cogeneration system according to a sixth exemplary embodiment of the present invention.

In the cogeneration system according to the sixth exemplary embodiment of the present invention as shown in FIG. 8, the plurality of generating devices 6are connected with the plurality of air-conditioning devices 30, 40, and 50, and the heat recovery mechanism 10 is installed in each of the air-conditioning devices 30, 40, and 50. Other construction and operation of the cogeneration system according to the sixth embodiment of the present invention are the same as or similar to those of the cogeneration system according to the fifth exemplary embodiment of the present invention, so the same reference numerals are given and its detailed description will be omitted.

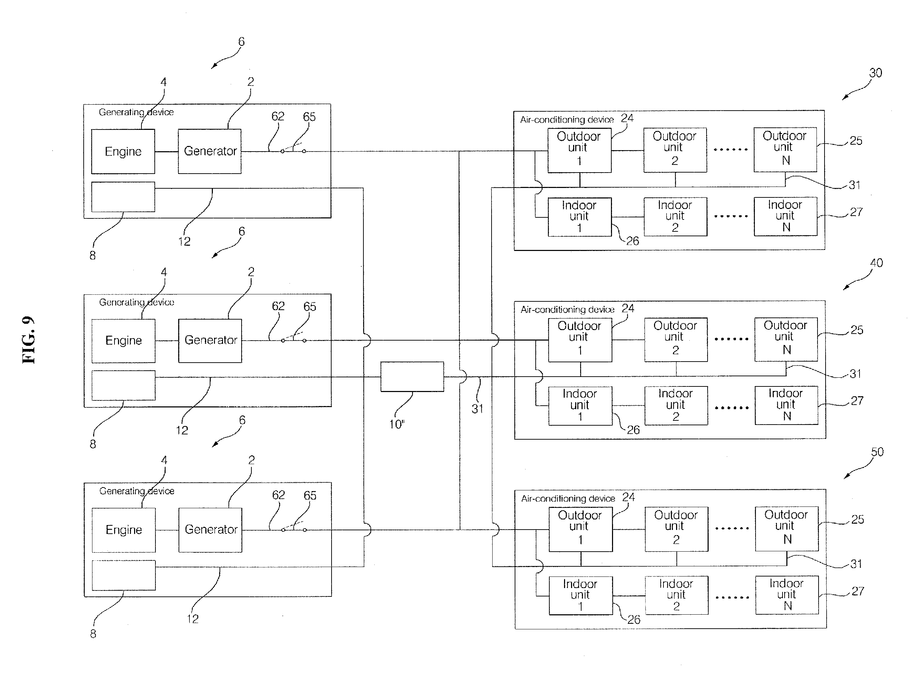

FIG. 9 is a view showing a construction of a cogeneration system according to a seventh exemplary embodiment of the present invention.

In the cogeneration system according to the seventh exemplary embodiment of the present invention, the plurality of generating devices 6 are connected with the plurality of air-conditioning devices 30, 40, and 50, and the heat recovery mechanism 10" is separately installed between the generating devices 6 and the air-conditioning devices 30, 40, and 50. Other construction and operation of the cogeneration system according to the seventh embodiment of the present invention are the same as or similar to those of the cogeneration system according to the fifth exemplary embodiment of the present invention, so the same reference numerals are given and its detailed description will be omitted.

Herein, only the single heat recovery mechanism 10" can be installed between the plurality of generating devices 6 and the plurality of air-conditioning devices 30, 40, and 50 as shown in FIG. 8, and heat recovery mechanisms can be respectively installed between the generating devices 6 and the air-conditioning devices 30, 40, and 50. Preferably, in order to minimize the number of components, the single heat recovery mechanism 10" is installed between the generating devices and the air-conditioning devices.

The cogeneration system constructed as described has the following advantages.

First, because the electric power generated by the air-conditioning device-connected generating device and the electric power generated by the heat consuming equipment-connected generating device are supplied to at least one of the air-conditioning device and the general power source, namely, because the electric power generated from the generating devices each having a different heat usage purpose are collectively controlled, the operation can be performed with the optimum efficiency.

Second, because the heat recovered by the single generating device and electric power generated by the single generating device are used for the plurality of air-conditioning devices, the hear recovery and power efficiency can be maximized.

Third, because the heat recovery mechanism is installed between the generating device and the plurality of air-conditioning devices, it can serve as a buffer in heat distribution to thus resolve the possible imbalance of the heat distribution.

Fourth, because the heat recovery mechanism is installed within the generating device or in each of the air-conditioning devices, the number of units can be minimized for facilitating controlling, and the installation area can be minimized.

Fifth, because the generating device is operated or stopped according to at least one input of the plurality of remote controllers that respectively control the plurality of indoor units, the user manipulation can be facilitated.

Sixth, because the plurality of generating devices are provided, the generating capacity is calculated according to the plurality of air-conditioning devices, and some or the entirety of the generating devices are operated, higher efficiency can be obtained at a relatively low cost compared with the case where electric power and heat of a plurality of air-conditioning devices are provided in a single large scale generating device.

Although the preferred embodiments of the invention have been disclosed for illustrative purposes, those skilled in the art will appreciate that various modifications, additions and substitutions are possible, without departing from the scope and spirit of the invention as disclosed in the accompanying claims.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art.

## Claims

1. A cogeneration system, comprising:
at least one generating device which generates electric power and produces heat; and
a power supply mechanism which supplies electric power generated by the at least one generating device to an air-conditioning system and a general power source.

2. A cogeneration system according to claim 1, wherein the general power source is a power transmission network of an electric power company.

3. A cogeneration system according to claim 1 or 2, wherein the heat produced by the at least one generating device is distributed to at least one of the air-conditioning system and heat consuming equipment.

4. A cogeneration system according to claim 1, 2, or 3, wherein the power supply mechanism comprises a plurality of switches for selectively supplying the electric power generated by the at least one generating device to the air-conditioning system and the general power source.

5. A central controller of a cogeneration system including a plurality of generating devices which generate electric power and produce heat, wherein the central controller controls operations of the generating devices based on operations of a plurality of indoor units of an air-conditioning system and operations of heat consuming equipment.

6. A central controller according to claim 5, wherein the central controller controls at least one of the generating devices to generate electric power based on a command to operate at least one of the indoor units, and a heat load of the heat consuming equipment.

7. A central controller according to claim 5 or 6, wherein the central controller controls operations of the generating devices based on at least one command sent by at least one remote controller.

8. A central controller according to claim 5, 6, or 7, wherein the central controller controls a power supply mechanism to supply electric power generated by at least one of the generating devices to the air-conditioning system.

9. A central controller according to claim 8, wherein the central controller controls the power supply mechanism to supply electric power generated by at least one of the generating devices to a general power source.

10. A central controller according to claim 9, wherein the general power source is a power transmission network of an electric power company.

11. A central controller according to any of claims 5 to 10, wherein the central controller controls operations of the generating devices based on a power demand of the indoor units.

12. A central controller according to claim 11, wherein each of the generating devices includes an engine, and the central controller controls at least one of an amount of fuel and an amount of air introduced into at least one of the engines based on a power demand of the indoor units.

13. A central controller according to claim 11, wherein the power demand depends on a number of indoor units in operation.

14. A cogeneration system, comprising:
at least one generating device which generates electric power and produces heat; and
at least one heat recovery mechanism which distributes heat produced by the at least one generating device to at least one air-conditioning device.

15. A cogeneration system according to claim 14, wherein the at least one heat recovery mechanism is provided in the at least one generating device.

16. A cogeneration system according to claim 14, wherein the at least one heat recovery mechanism is provided in the at least one air-conditioning device.

17. A cogeneration system according to claim 14, wherein the at least one heat recovery mechanism is provided between the at least one generating device and the at least one air-conditioning device.

18. A cogeneration system according to claim 14, wherein the heat recovery mechanism comprises a heat exchanger.

19. A cogeneration system according to claim 18, wherein the heat exchanger heats a refrigerant of the at least one air-conditioning device.

20. A cogeneration system according to claim 14, wherein the heat recovery mechanism receives heat from a heat exchanger of the at least one generating device.
